# EUROPEAN PATENT APPLICATION

(11) **EP 1 484 168 A1**
(43) Date of publication of application: **08.12.2004**
(21) Application number: 03380137.4
(22) Date of filing: 06.06.2003
(51) Int. Cl.: B29D 31/515, A43C 13/06

(54) **Attachment procedure of ornamental fittings to soles for footwear and fitting for putting into practice the procedure**

(71) Applicant: Ortuno Santa, Pedro, 30510 Yecla (ES)
(72) Inventor: Ortuno Santa, Pedro, 30510 Yecla (ES)
(74) Representative: Maldonado Jordan, Julia

(57) **Abstract**

The procedure consists in the establishment, in the recess or housing (2) of the mould (1), of depressions (6), with shape, dimension and positioning appropriate to receive the respective embellishing fittings (5), in such a manner, that the latter participate in the recess of the mould (1) prior to the vulcanisation of the sole, and during said vulcanisation remain partially embedded in the elastomeric material that constitutes said sole, thus becoming directly attached to the same in the absence of screws or rivets, visible from the exterior and with optimum attachment conditions due to the fact that said fittings include a laminar projection (7), situated at the rear and with orifices (8), intended to remain totally inserted in the elastomeric material that constitutes the sole.

## Description

### OBJECT OF THE INVENTION

The present invention refers to a new procedure for attaching embellishing fittings to footwear soles, specifically to soles obtained from elastomer or similar materials, during vulcanisation moulding processes.

The object of the invention is to optimise the implanting of these ornamental fittings on said sole.

The invention is also related to the special configuration of this type of ornamental fittings, with which the attachment procedure is efficiently achieved.

### BACKGROUND OF THE INVENTION

It is a common practice in a determined type of footwear, to integrate fittings on their soles, generally placed on the side wall or on their bottom base, acting as embellishers that contrast with the elastomeric material constituting the sole, due both to its own nature and to its design.

An original solution for the attachment of these fittings consisted in providing them with orifices for screwing them to the actual sole, with the collaboration of tap bolts, said solution being slow to operate and leaving the screw heads visible, which decisively determines the aesthetic appearance of the embellishing fitting.

Said attachment process is accelerated by substituting the screws or tap bolts by rivets, another technique that is also used and which however, keeps the design limitations entailed by said rivet heads on the embellisher as a whole.

A more sophisticated solution is the one described by the Spanish Patent of Invention P200200476, the holder of which is the actual applicant, and which consists of using embellishers with dihedral configuration, simultaneously adaptable to the side surface and to the lower face of the sole and provided with wide openings through which wedges, operatively established on said sole, pass through, in such a manner, that providing the dihedral configured by the embellisher with an angle, slightly inferior to the one determined between the side surface and the lower face of the sole, achieves a press fit of said embellisher, keeping it stable. This solution, as is evident from what has been previously described, is only valid for embellishers that simultaneously affect the side wall and the lower face of the sole, which involves a considerable limitation, at the same time being of limited design due to the need of openings for the implanting of wedges on the soles.

### DESCRIPTION OF THE INVENTION

The procedure proposed by the invention solves the previously described problem in a totally satisfactory manner, constituting an optimum and final solution for the attachment of said ornamental fittings on soles for footwear.

For this, and more specifically, this procedure consists of implanting the ornamental fittings during the actual sole-moulding operation, specifically integrating said fittings in the mould prior to the filling with the elastomeric material in solid phase.

In this sense, the mould shall be provided with housings for said ornamental fittings, which on one hand determine the correct positioning of the same, and on the other hand remain suitably integrated in the sole once it has been formed, in such a manner, that the attachment of the fittings to the sole is produced by the simple male-female housing between said elements in the recess of the mould.

No major problems are presented when the fittings are placed on the lower face of the sole when kept stabilized in the recess of the mould, but however, when said fittings affect their side wall, as is more common, a tendency to drop due to gravity exists, for which to this effect it has been planned to establish depressions coinciding in shape and dimensions with the projecting zone of the embellishing fittings, on the side walls of the mould, in order to obtain a male-female coupling between these elements which ensures the stability of the fittings without detriment to an easy and subsequent demoulding of the sole as a whole.

When this attachment is proved to be insufficient, the solid product that constitutes the sole, that is to say, the elastomeric material that is incorporated to the mould for vulcanisation, can be fragmented into pieces, in such a manner, that some of these pieces act as side supports, preventing the dropping of the likewise lateral fittings.

In order to achieve that this attachment be optimum, the fittings have been equipped with laminar projections intended to remain embedded in the elastomeric material, preferably equipped with orifices which in turn remain filled with said material, all of which entails a male-female coupling of the fitting to the body of the sole, ensuring a perfect attachment between these elements, preventing the detachment or tearing-off of the ornamental fittings.

### DESCRIPTION OF THE DRAWINGS

In order to complement the description that is being made and with the purpose of aiding a better understanding of the characteristics of the invention according to a preferred exemplary practical embodiment of the same, a set of drawings are enclosed, forming integral part of said description, in which, with illustrative and non limitative character, the following has been represented:
Figure 1 shows a schematic perspective representation of a mould for manufacturing footwear soles, performed according to the attachment procedure of ornamental fittings to said soles proposed by the invention.
Figure 2 shows, again according to a perspective view, a fitting intended for participating in the mould of the previous figure.
Figure 3 finally shows a sectional detail of the mould, with the corresponding sole in its interior, level to one of the embellishing fittings.

### PREFERRED EMBODIMENT OF THE INVENTION

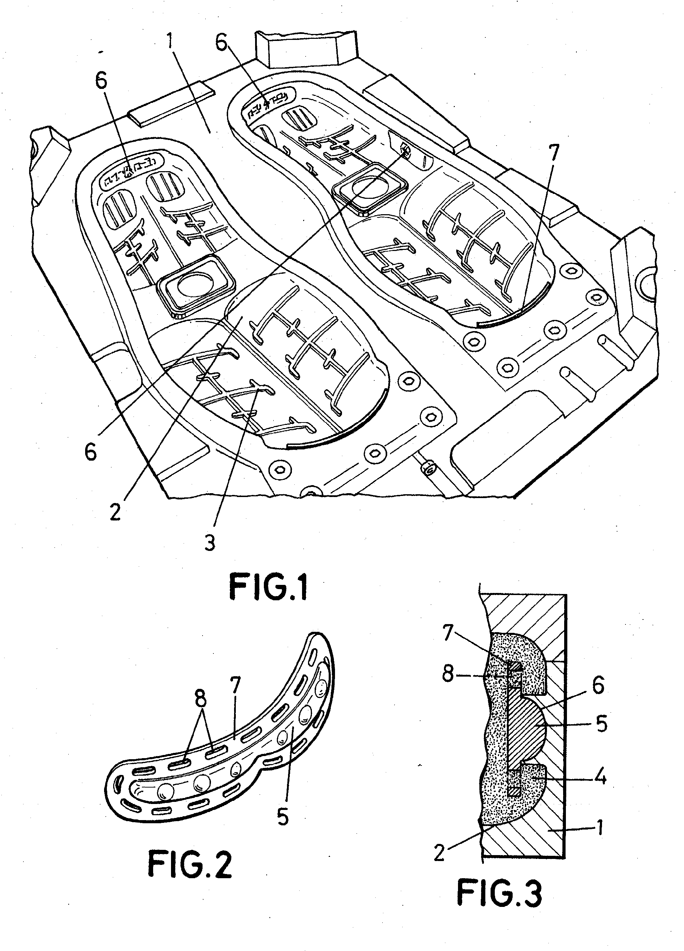

In view of the indicated figures and especially of Figure 1, it can be observed how the attachment procedure proposed by the invention, parts from any type of conventional mould (1), as for example a double mould, to obtain simultaneously the right and left soles, with respective depressions (2) equipped with reliefs (3) for equipping the sole with the volume and configuration planned for the same, but with the special particularity, according now to the invention, that, corresponding with said points of the sole (4) for which the location of an embellishing fitting (5) has been provided, the edge includes corresponding depressions (6) that are intended to press-fit into respective embellishers (5) in order to remain suitably stabilized prior to the vulcanisation phase and, subsequent to this, to remain finally integrated in the sole though visible through the surface of the latter, indistinctly on its side surface and/or on its lower surface.

The procedure consequently parts from the establishment in the mould (1) of said depressions (6) and of the subsequent implantation in said depressions (6) of respective embellishing fittings (5) finally proceeding to the vulcanisation of the material that constitutes the sole (4) in a totally conventional manner.

In order to achieve an optimum attachment of the fitting or fittings on the sole (4), it has been provided that each fitting (5) be equipped, in addition to a section that constitutes the actual embellishing fitting and that corresponds to the actual reference (5), with a laminar projection (7), preferably emerging from its rear or internal face, with considerable amplitude and intended to remain embedded in the elastomeric material that constitutes the sole (4), acting as a means that ensures an unmoveable attachment of the embellishing fitting to the sole.

This attachment effect of the laminar projection (7) may be enhanced with the collaboration of orifices (8) suitably distributed on said laminar projection (7), as is shown in Figure 2, in such a manner that the elastomeric material crosses through the projection (7) through orifices (8), generating a "sewing" effect on the embellishing fitting, that makes its detachment from the sole practically impossible .

## Claims

1. Attachment procedure of ornamental fittings to soles of footwear, specifically soles obtained from an elastomeric or similar material, during a vulcanisation moulding process, **characterized in that** it consists in the establishment, inside (2) the empty mould (1), specifically in depressions (6) operationally established to that effect, the different fittings (5) that have been planned to form part of the sole, subsequently proceeding to fill the recess of the mould (1) with the elastomeric material (4) in paste or liquid phase, in such a manner, that the solidification of said elastomeric material (4) is produced, the embellishing fittings (5) becoming partially inserted in the material that constitutes the sole (4), having provided, that between said depressions (6) and the projecting part of the fittings (5), a perfect fit is established that tends to stabilize the fittings versus the effect of gravity, and to which effect, a fragmentation of the elastomeric material to be vulcanised has also been planned, in such a manner, that pieces of said material are placed in the recess of the mould abutting against the fittings (5) corresponding to lateral zones of the sole, to avoid the dropping of said fittings prior to the vulcanisation of the elastomer.

2. Fitting for putting into practice the procedure of Claim 1, **characterised in that** parting from a body (5) that constitutes the actual embellisher, the same includes a laminar projection (7), preferably placed at a level with its rear or internal face, suitable orientated to become integrally inserted in the mass of elastomeric material that constitutes the actual sole.

3. Fitting, according to Claim 2, **characterised in that** said laminar projection (7) of the same, includes orifices (8), appropriately distributed along the same, intended to be filled with the elastomeric material during the injection moulding of the sole.
